# EUROPÄISCHE PATENTSCHRIFT

(11) **EP 1 982 054 B1**
(45) Veröffentlichungstag und Bekanntmachung des Hinweises auf die Patenterteilung: **30.09.2009**
(21) Anmeldenummer: 07703323.1
(22) Anmeldetag: 07.02.2007
(51) Int. Cl.: F01N 1/08, B60H 1/22, F23M 13/00

(54) **ABGASSCHALLDÄMPFER FÜR KRAFTFAHRZEUGZUSATZHEIZUNGEN**
EXHAUST GAS SILENCER FOR AUXILIARY HEATING SYSTEMS FOR MOTOR VEHICLES
SILENCIEUX DE GAZ D'ECHAPPEMENT POUR CHAUFFAGE AUXILIAIRE DE VEHICULES AUTOMOBILES

(30) Priorität: 07.02.2006 DE 102006005536
(43) Veröffentlichungstag der Anmeldung: 22.10.2008
(73) Patentinhaber: Spheros GmbH, 82205 Gilching (DE)
(72) Erfinder: ENGEL, Robert, 17033 Neubrandenburg (DE); MOECK, Jonas, 10623 Berlin (DE); PASCHEREIT, Christian, Oliver, 10623 Berlin (DE)
(74) Vertreter: Strasser, Wolfgang
(86) Internationale Anmeldenummer: PCT/EP2007/001040
(87) Internationale Veröffentlichungsnummer: WO 2007/090628

(56) Entgegenhaltungen:
- CH-A- 362 572
- DE-A1- 3 839 242
- DE-C- 964 915
- DE-C1- 4 311 080
- GB-A- 2 303 315

## Beschreibung

Die Erfindung betrifft einen Abgasschalldämpfer für Kraftfahrzeugzusatzheizungen gemäß dem Oberbegriff von Anspruch 1.

Der Einsatz von Zusatzheizungen in Kraftfahrzeugen gewinnt zunehmend an Bedeutung. Bekannt sind im Stand des Kraftfahrzeugs, insbesondere bei abgeschaltetem Verbrennungsmotor betreibbare Standheizungen, bei laufendem Verbrennungsmotor betreibbare Zuheizer und solche Zusatzheizungen, die sowohl im Stand als auch während der Fahrt des Kraftfahrzeugs zum Einsatz kommen. Insbesondere im Bereich der Personenbeförderung in Bussen oder dergleichen spielen Zusatzheizungen eine wichtige Rolle.

Neben der Einhaltung der gesetzlichen Vorschriften für die Zusammensetzung von Rauchgasen moderner und schadstoffarmer Wärmeerzeuger ist die im Betrieb der Vorrichtung auftretende Schallabstrahlung ein weiterer zu berücksichtigender Aspekt. Die Schallabstrahlung wird unter Umständen als zu laut und unangenehm empfunden.

Im Hinblick auf die Schallerzeugung kann grundsätzlich zwischen mechanischem und nicht-mechanischem Lärm unterschieden werden. Dabei lässt sich vor allem die Bewegung mechanischer Bauteile und Komponenten in die erste Kategorie einordnen. Daneben ist unter nicht-mechanischem Lärm die Ausbreitung einer Druckstörung mit Schallgeschwindigkeit in einem Fluid infolge dessen Eigenbewegung zu verstehen. Ein hoher Grad an Turbulenz trägt daneben zur Verstärkung dieses Lärmanteiles bei.

So sind bei Wärmeerzeugern insbesondere folgende mechanische Schallquellen bekannt: Motoren, Lüfter und Brennstoffpumpen zur Bereitstellung des für die Verbrennung erforderlichen Brennstoff-Luft-Gemisches. Als Quellen nicht mechanischen Lärms werden Verbrennungsgeräusche und Geräusche infolge der heißen Rauchgasströmung am Abgasstutzen angesehen.

Bezogen auf den nicht-mechanischen Lärm sind zur Minderung der Schallemissionen so genannte Primär- und Sekundärmaßnahmen bekannt. Primärmaßnahmen beeinflussen die Schallentstehung und Ausbreitung infolge einer stark turbulenten nicht vorgemischten Flamme bereits unmittelbar am Ort der Schallentstehung, das heißt bei auf Verbrennung basierenden Wärmeerzeugern in der Brennkammer selbst. So stellen insbesondere perforierte Brennraumwände eine gebräuchliche Methode zur Dämpfung der Brennkammerakustik dar. In Hinblick auf die Lärmerzeugung in Wärmeerzeugern darf darüber hinaus auch die akustische Rückkopplung zur Flamme nicht vernachlässigt werden. Auf diesem Sektor sind Maßnahmen der Lärmminderung infolge einer Optimierung der Austrittsgeometrien bekannt. Diese werden üblicherweise möglichst reflexionsarm gestaltet. Eine recht einfache und effiziente Lösung stellt in diesem Zusammenhang der Einsatz von Blenden im Austrittsstutzen dar. Darüber hinaus werden mit nachgeschalteten Abgasschalldämpfern ebenfalls positive Effekte der Lärmminderung erreicht. Eine weitere Möglichkeit, die akustischen Eigenschaften zu optimieren, ist durch den Einsatz von Helmholtzdämpfern gegeben.

Helmholtzdämpfer sind akustische Systeme, die aus einer schwingenden Luftsäule und einem angekoppelten Luftvolumen bestehen. Ähnlich einem Feder-Masse-System stellt auch der Helmholtzdämpfer ein schwingendes System dar. So ergibt sich aufgrund der geometrischen Abmessungen der Luftsäule und der spezifischen Dichte der sich darin befindlichen Luft eine akustische Masse. Diese lagert auf dem angekoppelten Luftvolumen, welches eine Art federndes Luftkissen darstellt. Damit der Helmholtzdämpfer den Schall absorbiert, wird die schwingende Luft in der Öffnung durch Reibung gebremst. Der entscheidende Nachteil von Helmholtzdämpfern besteht in der Tatsache, dass diese den Schall ausschließlich in einem sehr schmalen Frequenzbereich absorbieren. Darüber hinaus erfordern derartige Dämpfersystemen zusätzlichen Bauraum bzw. einen konstruktiven Eingriff in die Brennraumgeometrie, was in der Folge zu veränderten Abgasemissionswerten führen kann.

Neben der Herausforderung, den Druckverlust über einen Abgasschalldämpfer entsprechend gering zu halten, stellen sekundäre Maßnahmen zur Schalldämpfung eher ein räumliches Problem dar. Entsprechend der Leistungsgröße des Wärmeerzeugers und der damit verbundenen Rauchgasmenge erfordert der Einsatz eines sinnvoll abgestimmten und ausgelegten Abgasschalldämpfers zusätzlichen Bauraum. Dieser steht jedoch insbesondere bei mobilen Anwendungen nicht oder nur sehr eingeschränkt zur Verfügung.

Aus der DE 964 915 C ist ein Abgasschalldämpfer bekannt, der mit der Ausnahme alle Merkmale des Oberbegriffs von Anspruch 1 aufweist, dass er nicht für eine Kraftfahrzeugzusatzheizung sondern für eine Brennkraftmaschine gedacht ist. Diese beiden Einsatzbereiche sind weder hinsichtlich des zu dämpfenden Geräuschpegels noch hinsichtlich der durch den Schaldämpfer strömenden Rauchgasmengen und deren Geschwindigkeit direkt miteinander vergleichbar.

Der Erfindung liegt die Aufgabe zugrunde, einen Abgasschalldämpfer für Kraftfahrzeugzusatzheizungen zur Verfügung zu stellen, auf dessen Grundlage das Ausmaß an unerwünschten Schallemissionen verringert wird.

Diese Aufgabe wird mit den Merkmalen des unabhängigen Anspruchs gelöst.

Vorteilhafte Ausführungsformen der Erfindung sind in den abhängigen Ansprüchen angegeben.

Zwar ist es beispielsweise aus der GB-2 289 921 A bekannt, in Strahltriebwerken gezahnte Bereiche vorzusehen, um auf dieser Grundlage den Strahllärm zu reduzieren. Derartige Zähne oder Zacken werden auch als "Chevrons" bezeichnet. In diesem Sinne kann die gemäß der vorliegenden Erfindung eingesetzte Düse als Chevron-Düse bezeichnet werden. Eine derartige Düse stellt im Wesentlichen eine Mischeinrichtung dar. Dabei liegt dem Effekt der Lärmminderung die Tatsache zugrunde, dass Chevrons ein hohes Maß an axialer Wirbelstärke erzeugen, wodurch sich der heiße Abgasstrahl schneller ausweitet und sich mit der Umgebung vermischt. Hierdurch werden kohärente Wirbel, die für die Schallerzeugung bei Strahllärm verantwortlich sind, in Bezug auf ihre Entstehung behindert.

Bei Strahltriebwerken handelt es sich jedoch um ein völlig anderes technisches Einsatzgebiet, das sowohl im Hinblick auf die geometrischen Abmessungen als auch den durchgesetzten Rauchgas-Massenstrom mit dem Brennkammeraustritt einer Kraftfahrzeug-Zusatzheizung in keiner Weise vergleichbar ist. Während die Abgasstutzen der Brenner von KraftfahrzeugZusatzheizungen von einem Massestrom von etwa 0,03 kg/s durchströmt werden, weisen Triebwerke einen um den Faktor 103 bis 104 höheren Massenstrom auf.

Darüber hinaus dient die als Chevrondüse bekannte Mischeinrichtung von Fan- bzw. Mantelstromtriebwerken primär zur besseren Vermischung von heißem Kern- und kaltem Mantelstrom, d.h. zur Mischung zweier mit unterschiedlichen, aber jeweils sehr hohen Geschwindigkeiten aufeinander treffenden Triebwerksströmungen und zur Verminderung des hierdurch zusätzlich erzeugten Schalls.

Bei der vorliegenden Erfindung wird der aus dem gezahnten Rand der Düse austretende Rauchgas-Strom mit einer praktisch ruhenden Umgebungs-Luftmasse vermischt, so dass nicht ohne weiteres davon ausgegangen werden konnte, dass sich durch die Verwendung einer an ihrem Abgasaustrittsbereich einen gezahnten Rand aufweisenden Düse bei einer Kraftfahrzeugzusatzheizung eine Verbesserung des Schallpegels erzielen lassen würde.

Weiterhin erfolgt bei der Erfindung die Verwendung einer gezahnten Düse nicht für sich allein sondern in Kombination mit einer Blende, die es bei Strahltriebwerken nicht gibt. Die Blende stellt einen reflexionsarmen Brennkammerabschluss dar, mit dem die akustische Rückkopplung zur Flamme gemindert werden kann. Eine Blende als alleiniger Brennkammerabschluss würde aber den Gesamt-Schalldruckpegel des Brenners nicht wesentlich beeinflussen. Lediglich die Kombination der Blende mit dem gezahnten Rand der Düse führt zu einer erheblichen Minderung der Gesamt-Schallemissionen.

Nützlicherweise ist vorgesehen, dass der Abgasführungsbereich durch einen im Wesentlichen axialsymmetrischen Abgasstutzen gebildet ist.

Es ist bevorzugt, dass die Düse einen Düsenwinkel zwischen 3° und 7° aufweist. Beispielsweise kann der Düsenwinkel 5° betragen. Der Düsenwinkel muss nicht konstant sein, er kann auch über die axiale Erstreckung der Düse variieren. Beispielweise kann die Düse mit einem Düsenwinkel von 0 im Bereich der Blende beginnen, dann in einen Bereich mit einem Düsenwinkel von beispielsweise 5° übergehen, um dann im Bereich der Zähne am Abgasaustrittsbereich in einem weiter vergrößerten Düsenwinkel zu enden, so dass sich die Zähne in die Abgasströmung hinein erstrecken.

Ebenfalls kann vorgesehen sein, dass die Düse einen Düsenwinkel zwischen 7° und 14° aufweist. Beispielsweise beträgt der Düsenwinkel 10°, wobei auch hier wiederum ein konstanter Düsenwinkel oder ein sich ändernder Düsenwinkel vorgesehen sein können.

Gleiches gilt auch für Ausführungsformen der Erfindung, bei denen vorgesehen ist, dass die Düse einen Düsenwinkel zwischen 14° und 18° aufweist. Beispielsweise beträgt der Düsenwinkel 15°.

Es kann vorgesehen sein, dass der Abgasaustrittsbereich 12 Zähne aufweist.

Ebenfalls ist es möglich, dass der Abgasaustrittsbereich 6 Zähne aufweist. Neben diesen typischen Beispielen kann die Anzahl der Zähne auch andere Werte, insbesondere auch ungerade Werte annehmen. Form und Größe der Zähne müssen nicht einheitlich sein. Beispielsweise können einige größere Zähne tiefer als die restliche Zähen in die Abgasströmung hineinragen.

Die Erfindung ist weiterhin dadurch besonders vorteilhaft ausgebildet, dass der Durchmesser des Abgaseintrittsbereichs einen Wert zwischen 35 und 45 mm aufweist. Beispielsweise beträgt der Durchmesser des Abgaseintrittsbereiches 40 mm, insbesondere bei Heizsystemen für Nutzfahrzeuge, wie etwa Busse. Im PKW-Bereich sind Durchmesser im Bereich von 20 mm bevorzugt

Die Erfindung wird nun mit Bezug auf die begleitenden Zeichnungen anhand bevorzugter Ausführungsformen bespielhaft erläutert.

Es zeigen:
- Figur 1: eine schematische Schnittdarstellung eines erfindungsgemäßen Abgasschalldämpfers;
- Figur 2: Schalldruckpegel in Abhängigkeit von für die Verbrennung geltender Luftzahlen λ für verschiedene Abgasschalldämpfer;
- Figur 3: A-bewertete Schalldruckpegel in Abhängigkeit von für die Verbrennung geltender Luftzahlen λ für verschiedene Abgasschalldämpfer; und
- Figur 4: ein Schalldruck-Frequenz-Diagramm für verschiedene Abgasschalldämpfer.

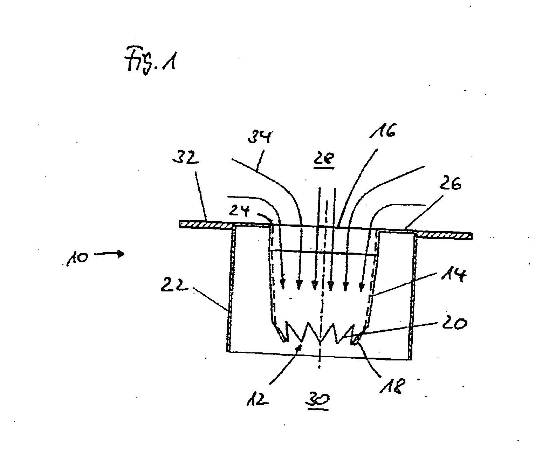

Figur 1 zeigt eine schematische Schnittdarstellung eines erfindungsgemäßen Abgasschalldämpfers. Der Abgasschalldämpfer 10 umfasst einen Abgasstutzen 22. Dieser Abgasstutzen 22 bildet eine Verbindung zwischen einem Brennraum 28 und der Umgebung 30. Der Brennraum 28 wird im Bereich des Abgasschalldämpfers 10 beispielsweise durch eine Brennkammerwand oder eine Wärmeübertragerwand 32 begrenzt. Innerhalb des Abgasstutzens 22 ist eine Düse 14 angeordnet. Diese Düse 14 ist wie der Abgasstutzen 22 im Wesentlichen axialsymmetrisch, und sie weist an ihrem Abgasaustritrsbereich 18 einen gezahnten Rand 20 auf. Die Düse 14 ist an ihrem Abgaseintrittsbereich 16 mit einem glatten Rand 24 ausgestattet, über den sie mit einer Blende 26 verbunden ist. Die Blende ist am Abgasstutzen 22 beziehungsweise der Wand 32 angebracht.

In dem Brennraum 28 entstehende heiße Rauchgase 34 gelangen durch die Öffnung der Blende 26 in die Düse 14. Über den gezahnten Rand 20 der Düse 14 verlassen die Rauchgase die Düse 14, und sie strömen in die Umgebung 30.

Grundsätzlich stellen Blenden in einem Abgasstutzen eine Möglichkeit dar, die akustische Rückkopplung des Abgasbereiches auf die Flamme im Brennraum zu beeinflussen, um auf diese Weise die akustischen Eigenschaften des Wärmeerzeugers zu optimieren. Dabei sind die Blenden insbesondere dahingehend auszulegen, dass sie eine möglichst reflektionsarme akustische Randbedingung realisieren. Indem im Abgasstutzen nun eine Düse mit gezahntem Abgassustrittsbereich angeordnet ist, kann zusätzlich der von der Blende erzeugte Strahllärm reduziert werden. Dabei ragen die Zähne insbesondere in die Strömung der heißen Rauchgase, wodurch sie ein hohes Maß an axialer Wirbelstärke erzeugen. Hierdurch weitet sich der Abgasstrahl schneller auf, und die Vermischung mit der Umgebungsluft wird beschleunigt. Folglich wird die Entstehung kohärente Wirbel, die für den Strahllärm verantwortlich sind, behindert.

Die im vorliegenden Ausführungsbeispiel gemäß Figur 1 dargestellte Düse hat ausgehend vom Abgaseintrittsbereich 16 zunächst einen Düsenwinkel von 0, der im weiteren Verlauf in einen Bereich mit einem Düsenwinkel von ungleich 0 übergeht. Ebenso sind andere Ausbildungen und Formen denkbar, beispielsweise mit konstantem Düsenwinkel, anderem Düsenwinkel als dargestellt oder mit einer anderen Anzahl und einer anderen Form der am Abgasaustrittsbereich 18 angeordneten Zähne.

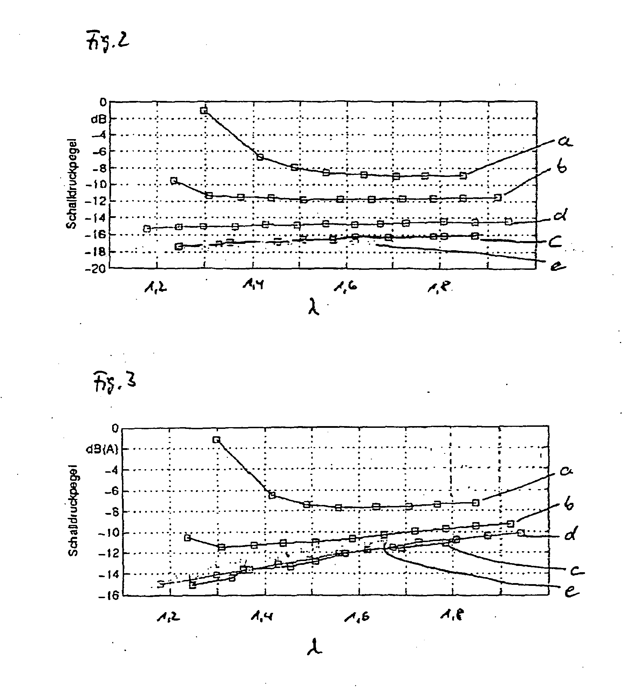

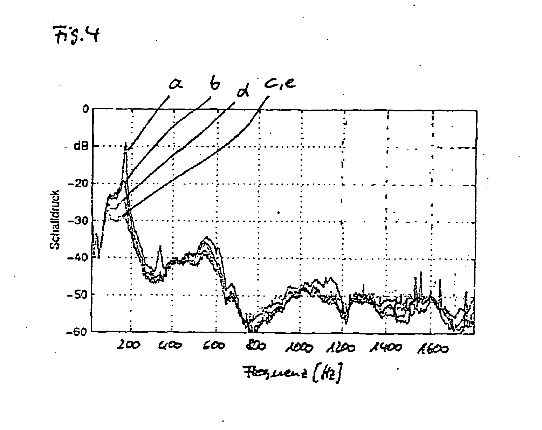

Figur 2 zeigt Schalldruckpegel in Abhängigkeit von für die Verbrennung geltender Luftzahlen λ für verschiedene Abgasschalldämpfer. Figur 3 zeigt A-bewertete Schalldruckpegel in Abhängigkeit von für die Verbrennung geltender Luftzahlein λ für verschiedene Abgasschalldämpfer. Figur 4 zeigt ein Schalldruck-Frequenz-Diagramm für verschiedene Abgasstutzen. In den nachfolgenden Diagrammen werden verschiedene Abgasschalldämpfer in Bezug auf ihren Schalldruckpegel mit dem Fall ohne Schalldämpfer verglichen. Die verschiedenen Wertegruppen sind jeweils einer bestimmten Konfiguration zuzuordnen, nämlich:
a: Ohne Abgssschalldämpfer
b: Abgasschalldämpfer des Standes der Technik
c: Erfindungsgemäßer Abgasschalldämpfer mit 12 Zähnen, einem Düsenwinkel von 5° und einem Düseneintrittsdurchmesser von 40 mm.
d: Erfindungsgemäßer Abgasschalldämpfer mit 6 Zähnen, eineun Düsenwinkel von 10° und einem Düseneintrittdurchmesser von 40 mm.
e: Erfindungsgemäßer Abgasschalldämpfer mit 6 Zähnen, einem Düsenwinkel von 15° und einem Düseneintrittdurchmesser von 40 mm.

Der Abgasschalldämpfer des Standes der Technik (Fall b) umfasst eine im Abgasstutzen angeordnete Blende, die durch zwei parallele sich in axiale Richtung erstreckende Öffnungen durchbrochen ist. Es ist erkennbar, dass die Konfigurationen c, d und e stets eine Verbesserung im Vergleich zu der Konfiguration ohne Abgasschalldämpfer sowie auch im Vergleich zur Konfiguration mit einem Abgasschalldämpfer des Standes der Technik zur Verfügung stellen. Insbesondere im fetten Brennerbetrieb, dass heißt bei kleinen λ-Werten, ist in den Figuren 2 und 3 ein unerwünschter Anstieg des Schalldruckpegels zu erkennen. Dieser Anstieg ist durch die einsetzende Verbrennungsinstabilität zu erklären. Mittels der Konfigurationen c, e und d wird dieses Problem überwunden. Die Konfigurationen c und d weisen eine bessere Reduktion des A-bewerteten Schalldruckpegels auf als die Konfiguration e. Gegenüber der Konfiguration des Standes der Technik (Fall b) konnte der A-bewertete Schalldruckpegel bis zu 2,5 dB(A) abgesenkt werden, im Vergleich zur "freien" Konfiguration sogar bis zu 7 dB(A). Anhand von Figur 4 ist insbesondere zu erkennen, dass für den Fall ohne Schalldämpfer und den Fall mit einem Schalldämpfer des Standes der Technik ein Maximum in der Schalldruckkurve bei einer Frequenz von 167 Hz auftritt. Im Bereich dieses Maximums gelingt es mit den Konfigurationen c, d und e, den Schalldruck deutlich zu verringern. Dies setzt unerwünschten Lärm im niedrigen Frequenzbereich ("Brummen") herab, und die Gefahr von Verbrennungsinstabilitäten an den Grenzen eines angestrebten Brennerarbeitsbersiches zwischen Luftzahlen λ zwischen beispielsweise 1,3 und 1,5 besteht nicht mehr.

Insgesamt liegt damit ein Abgasschalldämpfer vor, der zufrieden stellende Eigenschaften hat und zudem in einfacher Weise als klassisches Tiefziehteil oder Gussteil gefertigt werden kann.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Abgasschalldämpfer
- 12: Abgasführungsbereich
- 14: Düse
- 16: Abgaseintrittsbereich
- 18: Abgasaustrittsbeceich
- 20: gezahnter Rand
- 22: Abgasstutzen
- 24: glatter Rand
- 26: Blende
- 28: Brennraum
- 30: Umgebung
- 32: Wand
- 34: Rauchgas

## Patentansprüche

1. Abgasschalldämpfer (10) für Kraftfahrzeugzusatzheizungen, mit einem Abgasführungsbereich (12), innerhalb dessen eine Düse (14) angeordnet ist, die eine Abgaseintrittsöffnung (16) mit einem glatten Rand und einen Abgasaustrittsbereich (18) mit einem gezahnten Rand (20) aufweist,
**dadurch gekennzeichnet,**
**dass** der Abgasführungsbereich (12) durch einen Abgasstutzen (22) gebildet ist und
**dass** der glatte Rand (24) der Abgaseintrittöffnung (16) der Düse (14) in eine sich nach außen ersteckende, den Abgasstutzen (22) auf der Gaszutrittsseite verschließende Blende (26) übergeht, vermittels derer sie so am Abgasstutzen (22) befestigt ist, dass sie mit dem an ihrem Abgasaustrittsbereich (18) vorhandenen, gezahnten Rand (20) in den Abgasstutzen (22) hineinragt.

2. Abgasschalldämpfer (10) nach Anspruch 1, **dadurch gekennzeichnet: dass** der Abgasstutzen (22) im Wesentlichen axial symmetrisch ausgebildet ist.

3. Abgasschalldämpfer (10) nach Anspruch 1 oder 2, **dadurch gekennzeichnet, dass** die Düse einen Düsenwinkel zwischen 3° und 7° aufweist.

4. Abgasschalldämpfer (10) nach Anspruch 1 oder 2, **dadurch gekennzeichnet, dass** die Düse einen Düsenwinkel zwischen 7° und 14° aufweist.

5. Abgasschalldämpfer (10) nach Anspruch 1 oder 2, **dadurch gekennzeichnet, dass** die Düse einen Düsenwinkel zwischen 14° und 18° aufweist.

6. Abgasschalldämpfer (10) nach einem der vorhergehenden Ansprüche**, dadurch gekennzeichnet, dass** der Abgasaustrittsbereich 12 Zähne aufweist.

7. Abgasschalldämpfer (10) für Kraftfahrzeugzusatzheizungen nach einem der Ansprüche 1 bis 5, **dadurch gekennzeichnet, dass** der Abgasaustrittsbereich 6 Zähne aufweist.

8. Abgasschalldämpfer (10) für Kraftfahrzeugzusatzheizungen nach einem der vorhergehenden Ansprüche, **dadurch gekennzeichnet, dass** der Durchmesser des Abgaseintrittsbereichs einen Wert zwischen 35 und 45 mm aufweist.

## Claims

1. An exhaust gas silencer (10) for auxiliary motor vehicle heating systems comprising an exhaust gas guide region (12) within which is arranged a nozzle (14) having an exhaust gas inlet opening (16) with a smooth edge and an exhaust gas outlet region (18) with a serrated edge (20),
**characterised in that**
the exhaust gas guide region (12) is formed by an exhaust gas pipe portion (22), and
the smooth edge (24) of the exhaust gas inlet opening (16) of the nozzle (14) goes into an outwardly extending shield plate (26) which closes the exhaust gas pipe portion (22) on the gas feed side and by means of which it is so fixed to the exhaust gas pipe portion (22) that it projects into the exhaust gas pipe portion (22) with the serrated edge (20) which is in its exhaust gas outlet region (18).

2. An exhaust gas silencer (10) according to claim 1 **characterised in that** the exhaust gas pipe portion (22) is of a substantially axially symmetrical configuration.

3. An exhaust gas silencer (10) according to claim 1 or claim 2 **characterised in that** the nozzle has a nozzle angle of between 3° and 7°.

4. An exhaust gas silencer (10) according to claim 1 or claim 2 **characterised in that** the nozzle has a nozzle angle of between 7° and 14°.

5. An exhaust gas silencer (10) according to claim 1 or claim 2 **characterised in that** the nozzle has a nozzle angle of between 14° and 18°.

6. An exhaust gas silencer (10) according to one of the preceding claims **characterised in that** the exhaust gas outlet region has 12 teeth.

7. An exhaust gas silencer (10) for auxiliary motor vehicle heating systems according to one of claims 1 to 5 **characterised in that** the exhaust gas outlet region has 6 teeth.

8. An exhaust gas silencer (10) for auxiliary motor vehicle heating systems according to one of the preceding claims **characterised in that** the diameter of the exhaust gas inlet region is of a value of between 35 and 45 mm.

## Revendications

1. Silencieux de gaz d'échappement (10) pour chauffages auxiliaires de véhicules automobiles, comportant une zone d'acheminement des gaz d'échappement (12), à l'intérieur de laquelle est disposée une buse (14), qui comporte un orifice d'admission des gaz d'échappement (16) avec un bord lisse et une zone d'évacuation des gaz d'échappement (18) avec un bord denté (20),
**caractérisé**
**en ce que** la zone d'acheminement des gaz d'échappement (12) est formée par une tubulure de gaz d'échappement (22) et
**en ce que** le bord lisse (24) de l'orifice d'admission des gaz d'échappement (16) de la buse (14) se prolonge par un obturateur (26), qui s'étend vers l'extérieur, obture la tubulure de gaz d'échappement (22) sur le côté d'admission des gaz, et au moyen duquel elle est fixée à la tubulure de gaz d'échappement (22) de telle sorte qu'elle s'engage dans la tubulure de gaz d'échappement (22) avec le bord denté (20) présent au niveau de sa zone d'évacuation des gaz d'échappement (18).

2. Silencieux de gaz d'échappement (10) selon la revendication 1, **caractérisé en ce que** la tubulure de gaz d'échappement (22) est réalisée de manière sensiblement symétrique dans la direction axiale.

3. Silencieux de gaz d'échappement (10) selon la revendication 1 ou 2, **caractérisé en ce que** la buse possède un angle entre 3° et 7°.

4. Silencieux de gaz d'échappement (10) selon la revendication 1 ou 2, **caractérisé en ce que** la buse possède un angle entre 7° et 14°.

5. Silencieux de gaz d'échappement (10) selon la revendication 1 ou 2, **caractérisé en ce que** la buse possède un angle entre 14° et 18°.

6. Silencieux de gaz d'échappement (10) selon l'une quelconque des revendications précédentes, **caractérisé en ce que** la zone d'évacuation des gaz d'échappement comporte 12 dents.

7. Silencieux de gaz d'échappement (10) pour chauffages auxiliaires de véhicules automobiles, selon l'une quelconque des revendications 1 à 5, **caractérisé en ce que** la zone d'évacuation des gaz d'échappement comporte 6 dents.

8. Silencieux de gaz d'échappement (10) pour chauffages auxiliaires de véhicules automobiles, selon l'une quelconque des revendications précédentes, **caractérisé en ce que** le diamètre de la zone d'admission des gaz d'échappement a une valeur entre 35 et 45 mm.
